# EUROPEAN PATENT APPLICATION

(11) **EP 4 790 701 A1**
(43) Date of publication of application: **12.08.2026**
(21) Application number: 26151544.9
(22) Date of filing: 13.01.2026
(51) Int. Cl.: G09G 5/02

(54) **INFORMATION PROCESSING APPARATUS AND CONTROL METHOD**

(30) Priority: 05.02.2025 JP 2025017499
(71) Applicant: Lenovo Japan LLC, Tokyo 101-0021 (JP)
(72) Inventor: SATOH, Ryoji, Yokohama-shi, Kanagawa (JP); SUGIYAMA, Masato, Yokohama-shi, Kanagawa (JP); MAEDA, Jion, Yokohama-shi, Kanagawa (JP)
(74) Representative: Openshaw & Co.

(57) **Abstract**

To make a screen display brighter as necessary.

An information processing apparatus includes: a display unit configured to display colors based on three primary colors of red, blue, and green; a profile information storage unit configured to store first profile information indicating a ratio of each value of the three primary colors in white display adjusted in correspondence with display of the display unit, and second profile information indicating a ratio of each value of the three primary colors in white display in which luminance is increased as compared with the first profile information; and a display control unit configured to control a tint of the display unit by switching and using the first profile information and the second profile information when performing display on the display unit.

## Description

### BACKGROUND OF THE INVENTION

### Field of the Invention

The present invention relates to an information processing apparatus and a control method.

### Description of the Related Art

An information processing apparatus such as a laptop personal computer (hereinafter, referred to as a laptop PC) is used after performing color calibration for correcting a tint of white or the like displayed by a display unit (for example, refer to Japanese Unexamined Patent Application Publication No. 2011-180383).

### SUMMARY OF THE INVENTION

However, since white of the display is determined by a balance of three primary colors of red, green, and blue, the information processing apparatus in the related art adjusts accurate white in a direction of reducing a value of each of the three primary colors. Therefore, in the information processing apparatus in the related art, screen display may be darkened to display the accurate white.

The present invention has been made to solve the above-described problem, and an object of the present invention is to provide an information processing apparatus and a control method capable of making screen display brighter as necessary.

To solve the above-described problem, according to an aspect of the present invention, there is provided an information processing apparatus including: a display unit configured to display colors based on three primary colors of red, blue, and green; a profile information storage unit configured to store first profile information indicating a ratio of each value of the three primary colors in white display adjusted in correspondence with display of the display unit, and second profile information indicating a ratio of each value of the three primary colors in white display in which luminance is increased as compared with the first profile information; and a display control unit configured to control a tint of the display unit by switching and using the first profile information and the second profile information when performing display on the display unit.

In addition, in the information processing apparatus according to the aspect of the present invention, the display control unit may control the tint of the display unit based on the first profile information for performing tint correction with color priority in a normal state, and switches to the second profile information and controls the tint of the display unit in a case where a situation in which brightness of a screen is prioritized occurs.

In addition, in the information processing apparatus according to the aspect of the present invention, the case where the situation in which the brightness of the screen is prioritized occurs may include a case where brightness exceeding maximum luminance according to the first profile information is designated by an operation of a function key, and the display control unit may switch to the second profile information and control the tint of the display unit when the brightness exceeding the maximum luminance according to the first profile information is designated by the operation of the function key.

In addition, in the information processing apparatus according to the aspect of the present invention, the second profile information may include multi-stage profile information brighter than the first profile information, and the display control unit may switch the multi-stage profile information in response to the operation of the function key and control the tint of the display unit.

In addition, in the information processing apparatus according to the aspect of the present invention, the case where the situation in which the brightness of the screen is prioritized occurs may include a case where a white pixel ratio of an image displayed on the display unit is equal to or less than a threshold value, and the display control unit may switch to the second profile information and control the tint of the display unit when the white pixel ratio of the image is equal to or less than the threshold value.

In addition, in the information processing apparatus according to the aspect of the present invention, the case where the situation in which the brightness of the screen is prioritized occurs may include a case where ambient brightness is equal to or greater than a threshold value, and the display control unit may switch to the second profile information and control the tint of the display unit when the ambient brightness is equal to or greater than the threshold value.

In addition, according to another aspect of the present invention, there is provided a control method of an information processing apparatus including a display unit configured to display colors based on three primary colors of red, blue, and green, a profile information storage unit configured to store first profile information indicating a ratio of each value of the three primary colors in white display adjusted in correspondence with display of the display unit, and second profile information indicating a ratio of each value of the three primary colors in white display in which luminance is increased as compared with the first profile information, and a display control unit configured to control a tint of the display unit, the control method including a display control step of controlling the tint of the display unit by switching and using the first profile information and the second profile information when the display control unit performs display on the display unit.

The above-described aspect of the present invention can make the screen display brighter as necessary.

### BRIEF DESCRIPTION OF THE DRAWINGS

FIG. 1 is a view illustrating an example of a main hardware configuration of a laptop PC according to a first embodiment.
FIG. 2 is a functional block diagram illustrating an example of a functional configuration of the laptop PC according to the first embodiment.
FIG. 3 is a view illustrating a data example of a profile information storage unit according to the first embodiment.
FIG. 4 is a view illustrating an example of changing brightness of a screen by switching a plurality of profiles according to the first embodiment.
FIG. 5 is a flowchart illustrating an example of an operation of the laptop PC according to the first embodiment.
FIG. 6 is a flowchart illustrating a detailed example of an operation of the laptop PC according to the first embodiment.
FIG. 7 is a flowchart illustrating an example of processing in step S205 in FIG. 6.
FIG. 8 is a flowchart illustrating a detailed example of an operation of a laptop PC according to a second embodiment.
FIG. 9 is a flowchart illustrating a detailed example of an operation of a laptop PC according to a third embodiment.

### DETAILED DESCRIPTION OF THE INVENTION

Hereinafter, an information processing apparatus and a control method according to an embodiment of the present invention will be described with reference to the drawings.

### [First Embodiment]

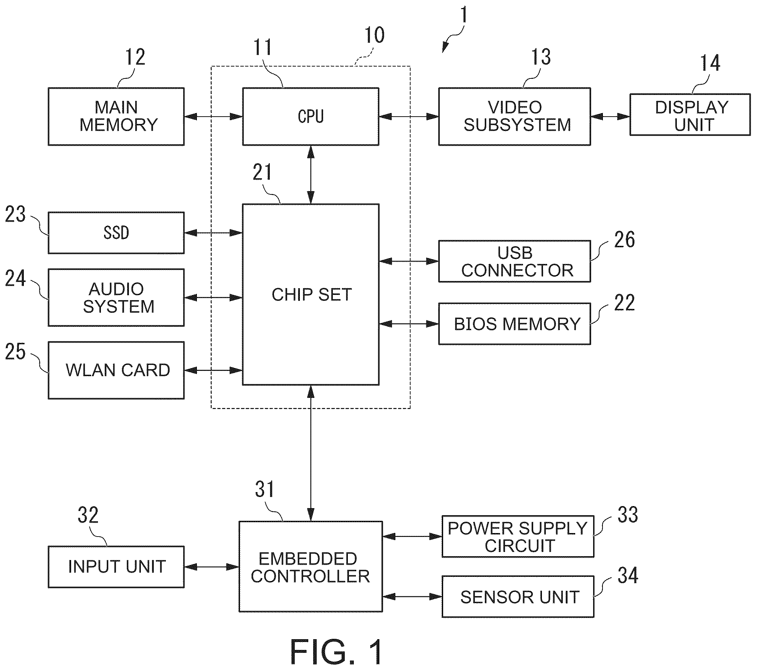

FIG. 1 is a view illustrating an example of a main hardware configuration of a laptop PC 1 according to a first embodiment. Note that in the present embodiment, the laptop PC 1 will be described as an example of the information processing apparatus.

As illustrated in FIG. 1, the laptop PC 1 includes a CPU 11, a main memory 12, a video subsystem 13, a display unit 14, a chip set 21, a BIOS memory 22, an SSD 23, an audio system 24, a WLAN card 25, a USB connector 26, an embedded controller 31, an input unit 32, a power supply circuit 33, and a sensor unit 34.

Note that in the present embodiment, the CPU 11 and the chip set 21 correspond to a main control unit 10. In addition, the main control unit 10 is an example of a processor (main processor) that executes a program stored in a memory (the main memory 12).

The central processing unit (CPU) 11 executes various types of arithmetic processing under program control and controls the entire laptop PC 1.

The main memory 12 is a writable memory used as a read area for an execution program of the CPU 11 or as a work area for writing processing data of the execution program. The main memory 12 is configured with, for example, a plurality of dynamic random access memory (DRAM) chips. The execution program includes a basic input output system (BIOS), an OS, various drivers for a hardware operation of peripheral devices, various services/utilities, an application program, and the like.

The video subsystem 13 is a subsystem for realizing a function related to image display and includes a video controller. The video controller processes a drawing instruction transmitted from the CPU 11, writes processed drawing information in the video memory, reads the drawing information from the video memory, and outputs the drawing information as drawing data (display data) to the display unit 14.

The display unit 14 is, for example, a liquid crystal display, and displays a display screen based on the drawing data (display data) output from the video subsystem 13. The display unit 14 is a display device that is able to display colors based on three primary colors (three primary colors of light) of red, blue, and green.

The chip set 21 includes a controller such as a universal serial bus (USB), a serial AT attachment (ATA), a serial peripheral interface (SPI) bus, a peripheral component interconnect (PCI) bus, a PCI-express bus, and a low pin count (LPC) bus, and a plurality of devices are connected to the chip set 21. In FIG. 1, as an example of the devices, the BIOS memory 22, the SSD 23, the audio system 24, the WLAN card 25, and the USB connector 26 are connected to the chip set 21.

The BIOS memory 22 is configured with, for example, an electrically rewritable non-volatile memory such as an electrically erasable programmable read only memory (EEPROM) or a flash ROM. The BIOS memory 22 stores, for example, a BIOS, system firmware for controlling the embedded controller 31, and the like.

The solid state drive (SSD) 23 (an example of a non-volatile storage device) stores an OS, various drivers, various services/utilities, an application program, and various types of data.

The audio system 24 records, reproduces, and outputs sound data.

The wireless local area network (WLAN) card 25 is connected to a network by a wireless LAN to perform data communication.

The USB connector 26 is a connector for connecting peripheral devices using USB.

The embedded controller 31 (an example of a sub control unit) is a one-chip microcomputer that monitors and controls various devices (peripheral devices, sensors, and the like) regardless of the system state of the laptop PC 1. In addition, the embedded controller 31 has a power supply management function of controlling the power supply circuit 33. Note that the embedded controller 31 is configured with a CPU, a ROM, a RAM, and the like (not illustrated), and includes an A/D input terminal, a D/A output terminal, a timer, and a digital input and output terminal of a plurality of channels. For example, the input unit 32, the power supply circuit 33, the sensor unit 34, and the like are connected to the embedded controller 31 via the input and output terminals, and the embedded controller 31 controls operations of these units.

The input unit 32 is, for example, an input device such as a keyboard, a pointing device, or a touch pad.

The power supply circuit 33 includes, for example, a DC/DC converter, a charging and discharging unit, a battery unit, an AC/DC adapter, and the like, and converts a direct current voltage supplied from the AC/DC adapter or the battery unit into a plurality of voltages required for operating the laptop PC 1. In addition, the power supply circuit 33 supplies power to each unit of the laptop PC 1 based on control from the embedded controller 31.

The sensor unit 34 is a sensor that detects various pieces of detection data inside the laptop PC 1. The sensor unit 34 includes, for example, a temperature sensor, a three-dimensional acceleration sensor, a gyro sensor, an illuminance sensor that detects ambient brightness of the laptop PC 1, and the like.

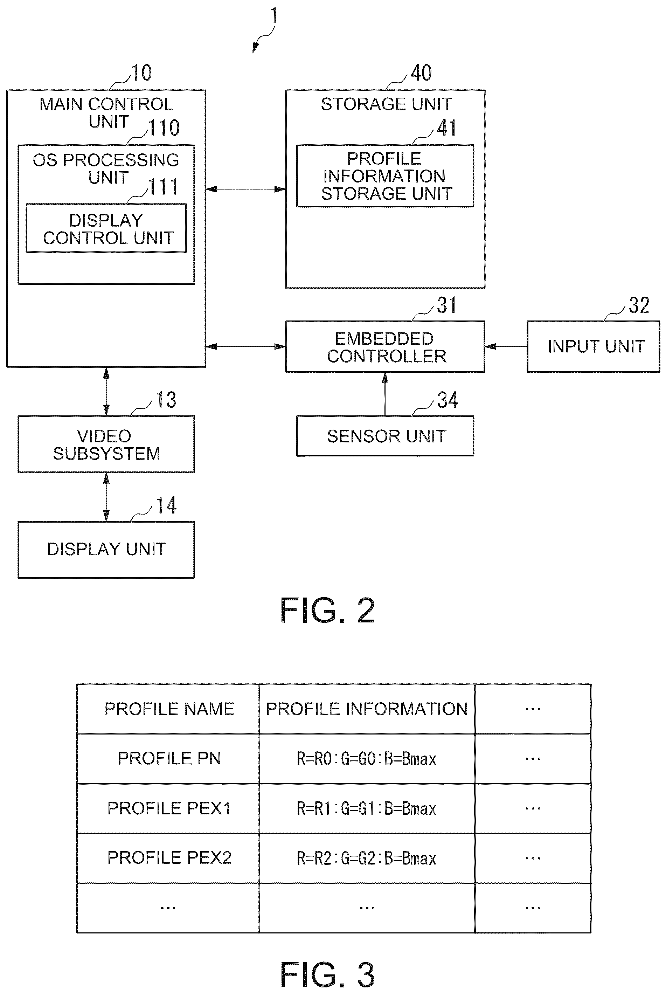

Next, a functional configuration of the laptop PC 1 according to the present embodiment will be described with reference to FIG. 2. FIG. 2 is a functional block diagram illustrating an example of a functional configuration of the laptop PC 1 according to the present embodiment. Note that in FIG. 2, among the functional configurations of the laptop PC 1, only configurations related to the present invention are described.

As illustrated in FIG. 2, the laptop PC 1 includes the main control unit 10, the video subsystem 13, the embedded controller 31, the input unit 32, the sensor unit 34, and a storage unit 40.

The storage unit 40 is a storage unit realized by a memory such as the SSD 23, and stores, for example, various types of information used for various types of processing of the main control unit 10. The storage unit 40 includes a profile information storage unit 41.

The profile information storage unit 41 is a storage unit realized by a memory such as the SSD 23, and stores profile information indicating a ratio of each value of three primary colors (red, blue, and green) in white display of the display unit 14. The profile information storage unit 41 stores a profile PN (first profile information) indicating a ratio of each value of the three primary colors in the white display adjusted in correspondence with the display of the display unit 14, and a profile PEX (second profile information) indicating a ratio of each value of the three primary colors in the white display in which luminance is increased as compared with the profile PN.

The profile PN is profile information for screen display according to color priority, and is profile information in which color calibration is performed on accurate white. In addition, the profile PEX is profile information for screen display according to luminance (brightness) priority and is extended profile information. Note that the profile PEX (extended profile information) may include a plurality of pieces of profile information (for example, profile PEX1, profile PEX2, ..., profile PEXN) .

Here, a data example of the profile information storage unit 41 will be described with reference to FIG. 3.

FIG. 3 is a view illustrating a data example of the profile information storage unit 41 in the present embodiment. As illustrated in FIG. 3, the profile information storage unit 41 stores a profile name (an example of identification information of a profile) and profile information in association with each other.

In the example illustrated in FIG. 3, the profile information storage unit 41 stores profile names, that is, "profile PN", "profile PEX1", "profile PEX2", .... The profile information of which the profile name is "profile PN" indicates "R = R0:G = G0:B = Bmax".

Here, "R" indicates a value of red, "G" indicates a value of green, and "B" indicates a value of blue. In addition, "R0" indicates a value (upper limit value) of red in brightness of an accurate color (accurate white), and "G0" indicates a value (upper limit value) of green in the brightness of the accurate color (accurate white). In addition, "Bmax" indicates a maximum value that is able to be set for blue.

In addition, the extended profile information of which the profile name is "profile PEX1" indicates "R = R2:G = G2:B = Bmax". Note that "R1" is a value of red and is a value (a value of high luminance) brighter than "R0" (R0 < R1). In addition, "G1" is a value of green and is a value (a value of high luminance) brighter than "G0" (G0 < G1).

In addition, the extended profile information of which the profile name is "profile PEX2" indicates "R = R2:G = G2:B = Bmax". Note that "R2" is a value of red and is a value (a value of high luminance) brighter than "R0" and "R1" (R0 < R1 < R2). In addition, "G2" is a value of green, and is a value (a value of high luminance) brighter than "G0" and "G1" (G0 < G1 < G2).

Returning to description of FIG. 2, the main control unit 10 (an example of a control unit) is a functional unit that is realized by causing the CPU 11 and the chip set 21 to execute a program stored in the BIOS memory 22, the SSD 23, and the main memory 12, and executes various types of processing based on the BIOS and the OS.

The main control unit 10 includes, for example, an OS processing unit 110.

The OS processing unit 110 is a functional unit realized by causing the CPU 11 and the chip set 21 to execute various programs including an OS stored in the SSD 23. The OS processing unit 110 executes processing based on the OS (OS processing) and executes processing based on various drivers and application programs operating on the OS.

The OS processing unit 110 includes a display control unit 111.

The display control unit 111 is, for example, a functional unit realized by a device driver, and controls display of the display unit 14. In a case of performing display on the display unit 14, the display control unit 111 switches and uses the profile PN (first profile information) stored in the profile information storage unit 41 and the profile PEX (second profile information) to control the tint of the display unit 14.

In a normal state, the display control unit 111 controls the tint of the display unit 14 based on the profile PN for performing tint correction with color priority, and when a situation in which brightness of the screen is prioritized occurs, the display control unit 111 switches to the profile PEX and controls the tint of the display unit 14.

A situation in which the brightness of the screen is prioritized includes, for example, a case where the brightness exceeding maximum luminance according to the profile PN is designated by an operation of a function key of the input unit 32. Here, the function key is, for example, a key for brightening screen display (increasing the luminance), such as an "F6" key.

When brightness exceeding the maximum luminance (L = 100%) according to the profile PN is designated by the operation of the function key (for example, pressing the "F6" key), the display control unit 111 switches to the profile PEX (PEX1 to PEXN) and controls the tint of the display unit 14. The display control unit 111 is able to switch to the profile PEX (PEX1 to PEXN) to enable screen display of a tint brighter than the maximum luminance (L = 100%) according to the profile PN.

In addition, the profile PEX includes the multi-stage profile PEX (PEX1 to PEXN) brighter than the profile PN. The display control unit 111 switches the multi-stage profile PEX (PEX1 to PEXN) in response to the operation of the function key (for example, pressing the "F6" key) to control the tint of the display unit 14.

Next, an operation of the laptop PC 1 according to the present embodiment will be described with reference to the drawings.

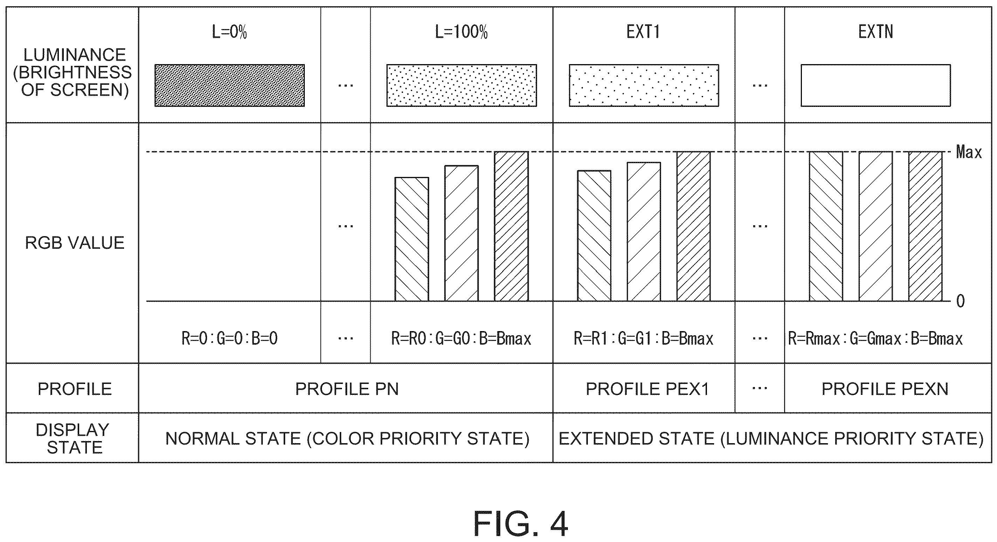

FIG. 4 is a view illustrating an example of changing brightness of a screen by switching between a plurality of profiles in the present embodiment.

In FIG. 4, luminance (brightness of the screen), an RGB value, a profile, and a display state are illustrated in order from the top. When the display state is the normal state (color priority state), the display control unit 111 controls the screen display by using the profile PN stored in the profile information storage unit 41.

In the profile PN that indicates accurate white, the RGB value of L = 100% of the brightest display is "R = R0:G = G0:B = Bmax", and the RGB value of L = 0% of the darkest display is "R = 0:G = 0:B = 0".

In addition, when the "F5" key, which is a function key for darkening the screen display (decreasing luminance), is pressed, the display control unit 111 decreases the RGB value based on the profile PN, and when the "F6" key is pressed, the display control unit 111 increases the RGB value based on the profile PN.

The display control unit 111 changes the RGB value to control the brightness (tint) of the screen while maintaining a ratio of the values of the three primary colors of the profile PN between L = 0% and L = 100% in response to pressing of the "F5" key and the "F6" key.

In addition, when the "F6" key is further pressed in a state in which the luminance (brightness of the screen) is L = 100%, the display control unit 111 switches the profile from the profile PN to the profile PEX1 stored in the profile information storage unit 41 as the extended state (luminance priority state) and controls the screen display. In addition, the luminance (brightness of the screen) in this case is referred to as extended luminance EXT1. The RGB value of the profile PEX1 in the extended luminance EXT1 is "R = R1:G = G1:B = Bmax", and each value is represented by the following Expression (1).$\begin{matrix}R 1 = R 0 + 1 \times \left(Rmax-R0\right) / N , \\ G 1 = G 0 + 1 \times \left(Gmax-G0\right) / N\end{matrix}$

Here, N indicates the number of stages of the profile PEX in the extended state.

In addition, an X-th RGB value in the extended state is "R = RX:G = GX:B = Bmax", and each value is represented by the following Expression (2).$\begin{matrix}RX = R 0 + X \times \left(Rmax-R0\right) / N , \\ GX = G 1 + X \times \left(Gmax-G0\right) / N\end{matrix}$

In addition, the RGB value of the profile PEXN in luminance EXTN is the RGB value of the N-th RGB value in the extended state, and is "R = Rmax:G = Gmax:B = Bmax". The display control unit 111 changes the screen display between luminance EXT1 and the luminance EXTN in the extended state in response to pressing of the "F5" key and the "F6" key, switches the screen display to a corresponding profile PEX among the N profiles PEX, and controls the screen display.

In addition, when the "F5" key is pressed in the luminance EXT1, the display control unit 111 returns from the extended state (luminance priority state) to the normal state (color priority state), switches the profile PEX1 to the profile PN (L = 100%), and controls the screen display.

Note that in the example illustrated in FIG. 4, the example in which the profile PN indicating accurate white is adjusted by decreasing the values of red (R) and green (G) is illustrated, but the present invention is not limited to this, and the profile PN indicating accurate white may be adjusted by decreasing the value of any one or two colors of red (R), green (G), or blue (B).

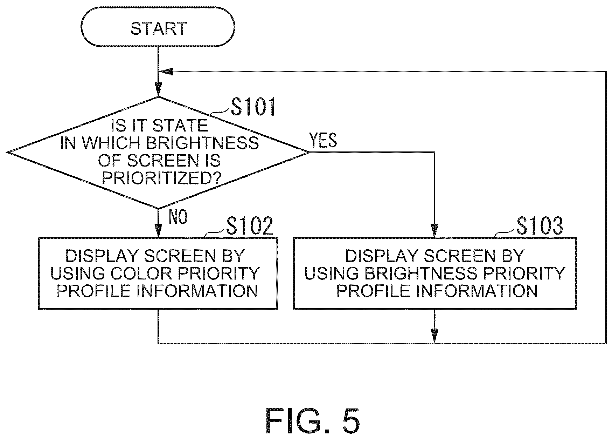

Next, an example of an operation of the laptop PC 1 according to the present embodiment will be described with reference to FIG. 5. Here, an operation of switching between the normal state (color priority state) and the extended state (luminance priority state) by the display control unit 111 will be described.

FIG. 5 is a flowchart illustrating an example of the operation of the laptop PC 1 according to the present embodiment. As illustrated in FIG. 5, the display control unit 111 determines whether or not a state in which the brightness of the screen is prioritized is set (step S101). Here, the state in which the brightness of the screen is prioritized is the above-described extended state (luminance priority state), and the display control unit 111 further determines whether or not the "F6" key is pressed in luminance of L = 100%, for example, as whether or not it is the state in which the brightness of the screen is prioritized. When it is the state in which the brightness of the screen is prioritized (YES in step S101), the display control unit 111 proceeds the processing to step S103. In addition, when it is not the state where the brightness of the screen is prioritized (in the normal state) (NO in step S101), the display control unit 111 proceeds the processing to step S102.

In step S102, the display control unit 111 displays the screen by using color priority profile information. That is, the display control unit 111 displays the screen based on an RGB value corresponding to designated luminance (brightness, L = 0% to 100%) by using the profile PN in the normal state (color priority state). After the processing of step S102, the display control unit 111 returns the processing to step S101.

In step S103, the display control unit 111 displays the screen by using the brightness priority profile information. That is, the display control unit 111 displays the screen based on an RGB value corresponding to designated extended luminance (EXT1 to EXTN) by using the profile PEX (PEX1 to PEXN) in the extended state (luminance priority state). After the processing of step S103, the display control unit 111 returns the processing to step S101.

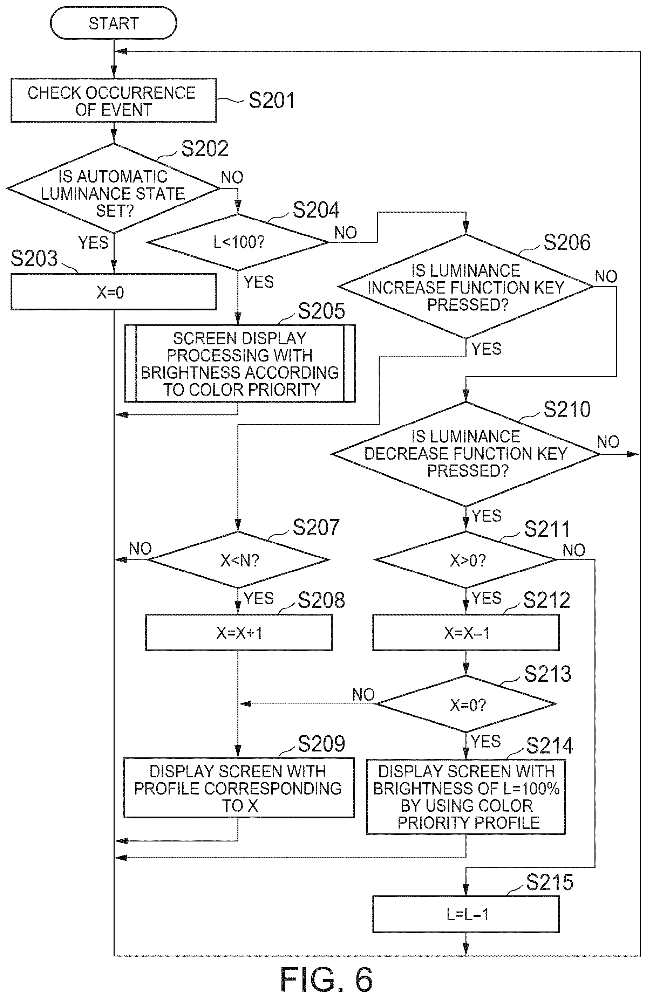

Next, a detailed example of the operation of the laptop PC 1 according to the present embodiment will be described with reference to FIG. 6. Here, an example of a case where the brightness of the screen is changed in response to pressing of the "F5" key and the "F6" key of the function key will be described.

FIG. 6 is a flowchart illustrating a detailed example of the operation of the laptop PC 1 according to the present embodiment. As illustrated in FIG. 6, first, the OS processing unit 110 of the laptop PC 1 checks occurrence of an event (step S201). The OS processing unit 110 checks the occurrence of the event such as pressing a function key, for example, by using an event handler.

Next, the display control unit 111 of the laptop PC 1 determines whether or not an automatic luminance state is set (step S202). The display control unit 111 determines whether or not a state in which the luminance is automatically changed (automatic luminance state) is present, for example, by an application or the like. When the automatic luminance state is set (YES in step S202), the display control unit 111 proceeds the processing to step S203. In addition, when the automatic luminance state is not set (NO in step S202), the display control unit 111 proceeds the processing to step S204.

In step S203, since the display control unit 111 does not perform the control of the luminance, initialization is performed by substituting "0" (X = 0) for a variable X. After the processing of step S203, the display control unit 111 returns the processing to step S201.

In addition, in step S204, the display control unit 111 determines whether or not a variable L is less than 100. When the variable L is less than 100 (L < 100, YES in step S204), the display control unit 111 proceeds the processing to step S205. In addition, when the variable L is not less than 100 (L ≥ 100, NO in step S204), the display control unit 111 proceeds the processing to step S206.

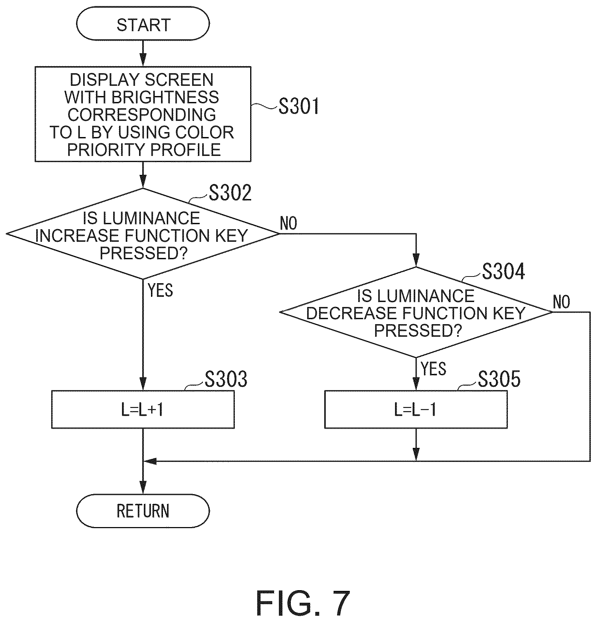

In step S205, the display control unit 111 switches to the color priority state and executes the screen display processing with brightness according to color priority. The display control unit 111 controls the brightness (luminance) of the display screen by using the profile PN. Note that details of the processing of step S205 will be described later with reference to FIG. 7. In addition, after the processing of step S205, the display control unit 111 returns the processing to step S201.

In addition, in step S206, the display control unit 111 determines whether or not a luminance increase function key is pressed. The display control unit 111 determines whether or not the luminance increase function key (for example, the "F6" key) is pressed by checking occurrence of an event. When the luminance increase function key (for example, the "F6" key) is pressed (YES in step S206), the display control unit 111 proceeds the processing to step S207 to transition to the extended state (luminance priority state). In addition, when the luminance increase function key (for example, the "F6" key) is not pressed (NO in step S206), the display control unit 111 proceeds the processing to step S210.

In step S207, the display control unit 111 determines whether or not the variable X is less than N. When the variable X is less than N (X < N, YES in step S207), the display control unit 111 proceeds the processing to step S208. In addition, when the variable X is not less than N (X ≥ N, NO in step S207), the display control unit 111 returns the processing to step S201.

In addition, in step S208, the display control unit 111 adds "1" to the variable X (X = X + 1).

Next, the display control unit 111 displays a screen with a profile corresponding to the variable X (step S209). That is, the display control unit 111 acquires the profile PEX corresponding to the variable X from the profile information storage unit 41 and displays the display screen by using the acquired profile PEX. In addition, after the processing of step S209, the display control unit 111 returns the processing to step S201.

In addition, in step S210, the display control unit 111 determines whether or not a luminance decrease function key is pressed. The display control unit 111 determines whether or not the luminance decrease function key (for example, the "F5" key) is pressed by checking occurrence of an event. When the luminance decrease function key (for example, an "F5" key) is pressed (YES in step S210), the display control unit 111 proceeds the processing to step S211. In addition, when the luminance decrease function key (for example, the "F5" key) is not pressed (NO in step S210), the display control unit 111 returns the processing to step S201.

In step S211, the display control unit 111 determines whether or not the variable X is greater than "0 (zero)". When the variable X is greater than "0" (X > 0, YES in step S211), the display control unit 111 proceeds the processing to step S212. In addition, when the variable X is not greater than "0" (X = 0, NO in step S212), the display control unit 111 proceeds the processing to step S215.

In addition, in step S212, the display control unit 111 subtracts "1" from the variable X (X = X - 1).

Next, the display control unit 111 determines whether or not the variable X is "0" (step S213). When the variable X is "0" (X = 0, YES in step S213), the display control unit 111 proceeds the processing to step S214. In addition, when the variable X is not "0" (X > 0, NO in step S213), the display control unit 111 proceeds the processing to step S209.

In step S214, the display control unit 111 displays the screen with brightness of L = 100% by using a color priority profile. The display control unit 111 acquires the profile PN indicating accurate white from the profile information storage unit 41 and displays the display screen with the maximum brightness of L = 100% by using the acquired profile PN. After the processing of step S214, the display control unit 111 returns the processing to step S201.

In addition, in step S215, the display control unit 111 subtracts "1" from the variable L (L = L - 1). That is, the display control unit 111 decreases the brightness (darkens the screen) by using the profile PN. After the processing of step S215, the display control unit 111 returns the processing to step S201.

Next, details of the above-described processing of step S205 in FIG. 6 will be described with reference to FIG. 7.

FIG. 7 is a flowchart illustrating an example of the processing of step S205 in FIG. 6.

As illustrated in FIG. 7, in the processing of step S205, first, the display control unit 111 displays a screen with brightness corresponding to the variable L by using the color priority profile (step S301). The display control unit 111 displays the screen with brightness corresponding to a value of the variable L by using the profile PN indicating accurate white as display of the normal state.

Next, the display control unit 111 determines whether or not the luminance increase function key is pressed (step S302). The display control unit 111 determines whether or not the luminance increase function key (for example, the "F6" key) is pressed by checking occurrence of an event. When a luminance increase function key (for example, the "F6" key) is pressed (YES in step S302), the display control unit 111 proceeds the processing to step S303. In addition, when the luminance increase function key (for example, "F6" key) is not pressed (NO in step S302), the display control unit 111 proceeds the processing to step S304.

In step S303, the display control unit 111 adds "1" to the variable L (L = L + 1). That is, the display control unit 111 increases the brightness (makes the screen bright) by using the profile PN. After the processing of step S303, the display control unit 111 returns the processing and ends the processing of step S205 in FIG. 6.

In addition, in step S304, the display control unit 111 determines whether or not the luminance decrease function key is pressed. The display control unit 111 determines whether or not the luminance decrease function key (for example, the "F5" key) is pressed by checking occurrence of an event. When a luminance decrease function key (for example, an "F5" key) is pressed (YES in step S304), the display control unit 111 proceeds the processing to step S305. In addition, when the luminance decrease function key (for example, the "F5" key) is not pressed (NO in step S304), the display control unit 111 returns the processing and ends the processing of step S205 in FIG. 6.

In step S305, the display control unit 111 subtracts "1" from the variable L (L = L - 1). That is, the display control unit 111 decreases the brightness (darkens the screen) by using the profile PN. After the processing of step S305, the display control unit 111 returns the processing and ends the processing of step S205 in FIG. 6.

As described above, the laptop PC 1 (information processing apparatus) according to the present embodiment includes the display unit 14, the profile information storage unit 41, and the display control unit 111. The display unit 14 is able to display colors based on three primary colors of red, blue, and green. The profile information storage unit 41 stores a profile PN (first profile information) indicating a ratio of each value of the three primary colors in the white display adjusted in correspondence with the display of the display unit 14, and a profile PEX (second profile information) indicating a ratio of each value of the three primary colors in the white display in which luminance is increased as compared with the profile PN. In a case of performing display on the display unit 14, the display control unit 111 switches and uses the profile PN stored in the profile information storage unit 41 and the profile PEX to control the tint of the display unit 14.

Accordingly, the laptop PC 1 (information processing apparatus) according to the present embodiment is able to make the screen display brighter as necessary by using the profile PEX indicating a ratio of each value of the three primary colors in the white display in which luminance is increased as compared with the profile PN.

In addition, in the present embodiment, in the normal state, the display control unit 111 controls the tint of the display unit 14 based on the profile PN for performing tint correction with color priority, and when a situation in which the brightness of the screen is prioritized occurs, the display control unit 111 switches to the profile PEX and controls the tint of the display unit 14.

As a result, the laptop PC 1 according to the present embodiment controls the tint of the display screen with color priority in the normal state, and is able to make the screen display brighter when a situation in which the brightness of the screen is prioritized occurs.

In addition, in the present embodiment, the case where the situation in which the brightness of the screen is prioritized occurs includes a case where a situation in which brightness exceeding the maximum luminance (for example, L = 100%) according to the profile PN is designated by an operation of a function key (for example, pressing the "F6" key). When brightness exceeding the maximum luminance (for example, L = 100%) according to the profile PN is designated by the operation of the function key (for example, pressing the "F6" key), the display control unit 111 switches to the profile PEX1 and controls the tint of the display unit 14.

Accordingly, the laptop PC 1 according to the present embodiment is able to switch the profile from the profile PN to the profile PEX1 by the operation of the function key (for example, pressing the "F6" key) and make the screen display brighter.

In addition, in the present embodiment, the profile PEX includes the multi-stage profile PEX (PEX1 to PEXN) brighter than the profile PN. The display control unit 111 switches the multi-stage profile PEX (PEX1 to PEXN) in response to the operation of the function key to control the tint of the display unit 14.

Accordingly, when the screen display is made brighter, the laptop PC 1 according to the present embodiment is able to make the screen display brighter by performing adjustment in a plurality of stages by using the multi-stage profile PEX (PEX1 to PEXN).

In addition, the control method according to the present embodiment is a control method of the laptop PC 1 including the display unit 14, the profile information storage unit 41, and the display control unit 111 that controls the tint of the display unit 14, and includes a display control step. The display unit 14 is able to display colors based on three primary colors of red, blue, and green. The profile information storage unit 41 stores a profile PN (first profile information) indicating a ratio of each value of the three primary colors in the white display adjusted in correspondence with the display of the display unit 14, and a profile PEX (second profile information) indicating a ratio of each value of the three primary colors in the white display in which luminance is increased as compared with the profile PN. In the display control step, when the display control unit 111 performs display on the display unit 14, the profile PN and the profile PEX are switched and used to control the tint of the display unit 14.

As a result, the control method according to the present embodiment exhibits the same effect as the above-described laptop PC 1, and the screen display is able to be made brighter as necessary.

### [Second Embodiment]

Next, a laptop PC 1 according to a second embodiment will be described with reference to the drawings. In the present embodiment, a modification example will be described in which the case where the situation in which the brightness of the screen is prioritized occurs is a case where a white pixel ratio of an image displayed on the display unit 14 is equal to or less than a threshold value.

Note that a main hardware configuration and a functional configuration of the laptop PC 1 according to the second embodiment are the same as those of the first embodiment illustrated in FIGS. 1 and 2, and thus the description thereof will be omitted here. In the present embodiment, the processing of the display control unit 111 is different, and here, the processing of the display control unit 111 will be described.

In the present embodiment, the case where the situation in which the brightness of the screen is prioritized occurs includes a case where the white pixel ratio of the image displayed on the display unit 14 is equal to or less than a threshold value (equal to or less than a first threshold value). When the white pixel ratio of the image is equal to or less than the threshold value, the display control unit 111 switches to the profile PEX and controls the tint of the display unit 14.

For example, when a white pixel ratio of the image to be displayed is equal to or less than a threshold value of a level at which white is not concerned, the display control unit 111 determines that the situation in which brightness of the screen is prioritized occurs, switches to the profile PEX, and displays the display screen by using the profile PEX. In addition, for example, when a white pixel ratio of the image to be displayed is larger than a threshold value, the display control unit 111 determines that a situation where a color is prioritized is present, and displays the display screen by using the profile PN indicating accurate white.

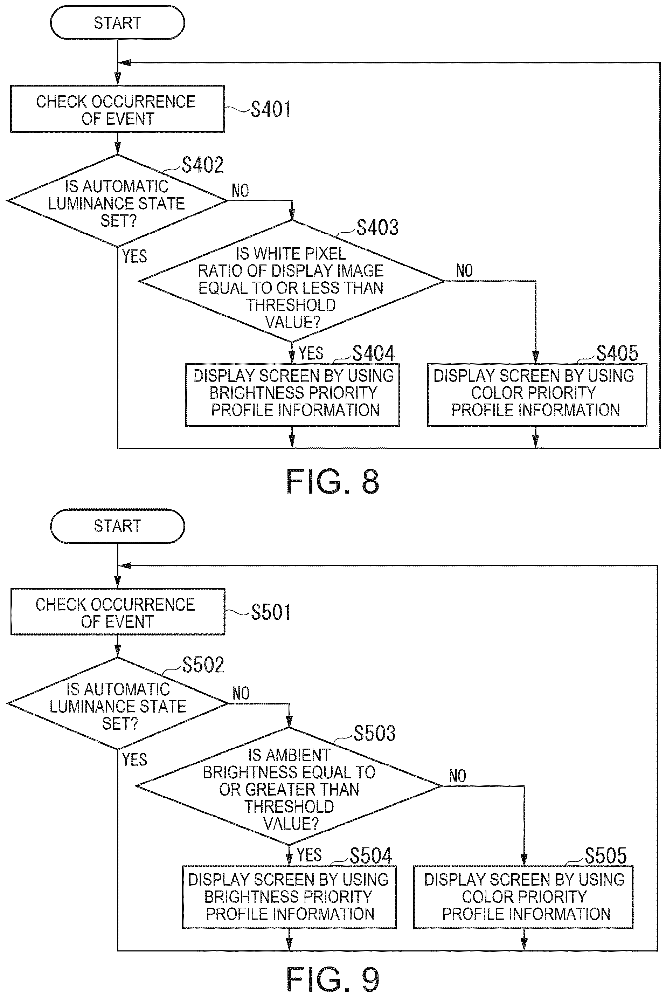

Next, a detailed example of the operation of the laptop PC 1 according to the present embodiment will be described with reference to FIG. 8.
FIG. 8 is a flowchart illustrating a detailed example of the operation of the laptop PC 1 according to the present embodiment.

As illustrated in FIG. 8, first, the OS processing unit 110 of the laptop PC 1 checks the occurrence of an event (step S401). The OS processing unit 110 checks the occurrence of the event such as pressing a function key, for example, by using an event handler.

Next, the display control unit 111 of the laptop PC 1 determines whether or not the automatic luminance state is set (step S402). The display control unit 111 determines whether or not a state in which the luminance is automatically changed (automatic luminance state) is present, for example, by an application or the like. In a case of the automatic luminance state (YES in step S402), the display control unit 111 returns the processing to step S401. In addition, when it is not the automatic luminance state (NO in step S402), the display control unit 111 proceeds the processing to step S403.

In step S403, the display control unit 111 determines whether or not the white pixel ratio of the display image is equal to or less than the threshold value. When the white pixel ratio of the display image is equal to or less than the threshold value (YES in step S403), the display control unit 111 proceeds the processing to step S404. In addition, when the white pixel ratio of the display image is not equal to or less than the threshold value (exceeds the threshold value) (NO in step S403), the display control unit 111 proceeds the processing to step S405.

In step S404, the display control unit 111 displays a screen by using brightness priority profile information. The display control unit 111 displays a screen by using the profile PEX stored in the profile information storage unit 41. Note that the display control unit 111 may switch and use the multi-stage profile PEX (for example, PEX1 to PEXN) in correspondence with a value of the white pixel ratio of the display image. After the processing of step S404, the display control unit 111 returns the processing to step S401.

In addition, in step S405, the display control unit 111 displays the screen by using the color priority profile information. The display control unit 111 displays the screen by using the profile PN (profile indicating accurate white) stored in the profile information storage unit 41. After the processing of step S405, the display control unit 111 returns the processing to step S401.

As described above, in the laptop PC 1 according to the present embodiment, the case where the situation in which the brightness of the screen is prioritized occurs includes a case where the white pixel ratio of the image displayed on the display unit 14 is equal to or less than the threshold value. When the white pixel ratio of the image is equal to or less than the threshold value, the display control unit 111 switches to the profile PEX and controls the tint of the display unit 14.

As a result, when the laptop PC 1 according to the present embodiment displays an image in which the white pixel ratio is low, the screen display is able to be made brighter. In addition, the laptop PC 1 according to the present embodiment is able to automatically adjust the brightness of the screen display according to the white pixel ratio of the image, and is able to improve convenience.

### [Third Embodiment]

Next, a laptop PC 1 according to a third embodiment will be described with reference to the drawings. In the present embodiment, a modification example will be described in which the case where the situation in which the brightness of the screen is prioritized occurs is a case where ambient brightness of the laptop PC 1 is equal to or greater than a threshold value.

Note that a main hardware configuration and a main functional configuration of the laptop PC 1 according to the third embodiment are the same as those of the first embodiment illustrated in FIGS. 1 and 2, and thus the description thereof will be omitted here. In the present embodiment, the processing of the display control unit 111 is different, and here, the processing of the display control unit 111 will be described.

In the present embodiment, the case where the situation in which the brightness of the screen is prioritized occurs includes a case where the ambient brightness is equal to or greater than the threshold value. When the ambient brightness is equal to or greater than the threshold value, the display control unit 111 switches to the profile PEX and controls the tint of the display unit 14.

For example, when the ambient brightness detected by an illuminance sensor of the sensor unit 34 is equal to or greater than a threshold value (equal to or greater than a second threshold value) at a level where white is not concerned, the display control unit 111 determines that a situation in which the brightness of the screen is prioritized occurs, switches to the profile PEX, and displays the display screen by using the profile PEX. In addition, for example, when the ambient brightness detected by the illuminance sensor of the sensor unit 34 is less than the threshold value, the display control unit 111 determines that it is a situation in which the color is prioritized, and displays the display screen by using the profile PN indicating accurate white.

Next, a detailed example of the operation of the laptop PC 1 according to the present embodiment will be described with reference to FIG. 9.

FIG. 9 is a flowchart illustrating a detailed example of the operation of the laptop PC 1 according to the present embodiment.

As illustrated in FIG. 9, first, the OS processing unit 110 of the laptop PC 1 checks occurrence of an event (step S501). The OS processing unit 110 checks the occurrence of the event such as pressing a function key, for example, by using an event handler.

Next, the display control unit 111 of the laptop PC 1 determines whether or not the automatic luminance state is set (step S502). The display control unit 111 determines whether or not a state in which the luminance is automatically changed (automatic luminance state) is present, for example, by an application or the like. When the automatic luminance state is set (YES in step S502), the display control unit 111 returns the processing to step S501. In addition, when the automatic luminance state is not set (NO in step S502), the display control unit 111 proceeds the processing to step S503.

In step S503, the display control unit 111 determines whether or not the ambient brightness is equal to or greater than the threshold value. The display control unit 111 determines whether or not the ambient brightness detected by the illuminance sensor of the sensor unit 34 is equal to or greater than the threshold value. When the ambient brightness is equal to or greater than the threshold value (YES in step S503), the display control unit 111 proceeds the processing to step S504. In addition, when the ambient brightness is not equal to or greater than the threshold value (is less than the threshold value) (NO in step S503), the display control unit 111 proceeds the processing to step S505.

In step S504, the display control unit 111 displays the screen by using the brightness priority profile information. The display control unit 111 displays a screen by using the profile PEX stored in the profile information storage unit 41. Note that the display control unit 111 may switch and use the multi-stage profile PEX (for example, PEX1 to PEXN) in correspondence with a value of the ambient brightness. After the processing of step S504, the display control unit 111 returns the processing to step S501.

In addition, in step S505, the display control unit 111 displays the screen by using the color priority profile information. The display control unit 111 displays the screen by using the profile PN (profile indicating accurate white) stored in the profile information storage unit 41. After the processing of step S505, the display control unit 111 returns the processing to step S501.

As described above, in the laptop PC 1 according to the present embodiment, the case where a situation in which the brightness of the screen is prioritized occurs includes a case where the ambient brightness is equal to or greater than the threshold value. When the ambient brightness is equal to or greater than the threshold value, the display control unit 111 switches to the profile PEX and controls the tint of the display unit 14.

As a result, when the ambient brightness is bright, the laptop PC 1 according to the present embodiment is able to make the screen display brighter. In addition, the laptop PC 1 according to the present embodiment is able to automatically adjust the brightness of the screen display in correspondence with the ambient brightness, and is able to improve convenience.

Note that the present invention is not limited to each of the above-described embodiments and is able to be modified without departing from the gist of the present invention.

For example, in each of the above-described embodiments, the example in which the information processing apparatus is the laptop PC 1 is described, but the present invention is not limited to this, and for example, another information processing apparatus such as a tablet terminal device or a desktop PC may be used.

In addition, in each of the above-described embodiments, the example in which the display control unit 111 is realized by a device driver on the OS is described, but the present invention is not limited to this, and may be realized by another functional unit such as an application program.

In addition, in each of the above-described embodiments, as an example of the case where the situation in which the brightness of the screen is prioritized occurs, a case where brightness exceeding the maximum luminance (L = 100%) according to the profile PN is designated by the operation of the function key (for example, pressing the "F6" key), a case where the white pixel ratio of the display image is equal to or less than the threshold value (equal to or less than the first threshold value), and a case where the ambient brightness is equal to or greater than the threshold value (equal to or greater than the second threshold value) are described, but the present invention is not limited thereto. When the situation in which the brightness of the screen is prioritized occurs, another case (another condition) may be used.

In addition, in each of the above-described embodiments, the example in which the operation of the function key is pressing of the "F6" key and pressing of the "F5" key is described, but the present invention is not limited to this, and the operation of other function keys may be used.

In addition, in each of the above-described embodiments, the example in which the profile PN indicating accurate white is adjusted by decreasing the values of red (R) and green (G) is described, but the present invention is not limited to this, and the profile PN indicating accurate white may be adjusted by decreasing the value of any one or two of red (R), green (G), and blue (B).

Note that each configuration of the above-described laptop PC 1 includes a computer system at the inside. Then, a program for realizing the function of each configuration included in the above-described laptop PC 1 may be recorded on a computer-readable recording medium, and the program recorded on the recording medium may be loaded into the computer system and executed to perform the processing in each configuration included in the above-described laptop PC 1. Here, the phrase "program recorded on the recording medium may be loaded into the computer system and executed" includes installation of the program in the computer system. The term "computer system" stated here includes hardware such as an OS and peripheral devices.

In addition, the term "computer system" may include a plurality of computer devices connected via a network including a communication line such as the Internet, a WAN, a LAN, or a dedicated line. In addition, the term "computer-readable recording medium" refers to a storage device such as a portable medium such as a flexible disk, a magneto-optical disc, a ROM, or a CD-ROM, or a hard disk incorporated in a computer system. As described above, the recording medium in which the program is stored may be a non-transitory recording medium such as a CD-ROM.

In addition, the recording medium also includes a recording medium provided on an inner side or an outer side accessible from a distribution server to distribute the program. Note that a configuration in which the program is divided into a plurality of portions, and the divided portions are downloaded at different timings and then combined in each configuration provided in the laptop PC 1, or a configuration in which different distribution servers respectively distribute the divided programs, may be used. Further, the term "computer-readable recording medium" includes a medium that holds a program for a certain period of time such as a volatile memory (RAM) inside a computer system serving as a server or a client when a program is transmitted via a network. In addition, the program may be a program for realizing a part of the above-described functions. Furthermore, the program may be a so-called difference file (difference program) that is able to realize the above-described functions in combination with a program already recorded in the computer system.

In addition, some or all of the above-described functions may be realized as an integrated circuit such as a large scale integration (LSI). Each of the above-described functions may be individually processed, or a part or all of the above-described functions may be integrated and processed. In addition, a method of integrating circuits is not limited to the LSI, and may be realized by a dedicated circuit or a general-purpose processor. In addition, when a technique of integrating circuits appears as a substitute for the LSI due to advancement of a semiconductor technique, an integrated circuit using the technique may be used. Description of Symbols
- 1: laptop PC
- 10: main control unit
- 11: CPU
- 12: main memory
- 13: video subsystem
- 14: display unit
- 21: chip set
- 22: BIOS memory
- 23: SSD
- 24: audio system
- 25: WLAN card
- 26: USB connector
- 31: embedded controller (EC)
- 32: input unit
- 33: power supply circuit
- 34: sensor unit
- 40: storage unit
- 41: profile information storage unit
- 110: OS processing unit
- 111: display control unit

Further aspects of the invention are provided by the subject matter of the following numbered clauses:
Clause 1. An information processing apparatus comprising:
   a display unit configured to display colors based on three primary colors of red, blue, and green;
   a profile information storage unit configured to store first profile information indicating a ratio of each value of the three primary colors in white display adjusted in correspondence with display of the display unit, and second profile information indicating a ratio of each value of the three primary colors in white display in which luminance is increased as compared with the first profile information; and
   a display control unit configured to control a tint of the display unit by switching and using the first profile information and the second profile information when performing display on the display unit.
Clause 2. The information processing apparatus according to clause 1,
   wherein the display control unit
   controls the tint of the display unit based on the first profile information for performing tint correction with color priority in a normal state, and
   switches to the second profile information and controls the tint of the display unit in a case where a situation in which brightness of a screen is prioritized occurs.
Clause 3. The information processing apparatus according to clause 2,
   wherein the case where the situation in which the brightness of the screen is prioritized occurs includes a case where brightness exceeding maximum luminance according to the first profile information is designated by an operation of a function key, and
   the display control unit switches to the second profile information and controls the tint of the display unit when the brightness exceeding the maximum luminance according to the first profile information is designated by the operation of the function key.
Clause 4. The information processing apparatus according to clause 3,
   wherein the second profile information includes multi-stage profile information brighter than the first profile information, and
   the display control unit switches the multi-stage profile information in response to the operation of the function key and controls the tint of the display unit.
Clause 5. The information processing apparatus according to clause 2,
   wherein the case where the situation in which the brightness of the screen is prioritized occurs includes a case where a white pixel ratio of an image displayed on the display unit is equal to or less than a threshold value, and
   the display control unit switches to the second profile information and controls the tint of the display unit when the white pixel ratio of the image is equal to or less than the threshold value.
Clause 6. The information processing apparatus according to clause 2,
   wherein the case where the situation in which the brightness of the screen is prioritized occurs includes a case where ambient brightness is equal to or greater than a threshold value, and
   the display control unit switches to the second profile information and controls the tint of the display unit when the ambient brightness is equal to or greater than the threshold value.
Clause 7. A control method of an information processing apparatus including a display unit configured to display colors based on three primary colors of red, blue, and green, a profile information storage unit configured to store first profile information indicating a ratio of each value of the three primary colors in white display adjusted in correspondence with display of the display unit, and second profile information indicating a ratio of each value of the three primary colors in white display in which luminance is increased as compared with the first profile information, and a display control unit configured to control a tint of the display unit, the control method comprising:
   a display control step of controlling the tint of the display unit by switching and using the first profile information and the second profile information when the display control unit performs display on the display unit.

## Claims

1. An information processing apparatus comprising:
a display unit configured to display colors based on three primary colors of red, blue, and green;
a profile information storage unit configured to store first profile information indicating a ratio of each value of the three primary colors in white display adjusted in correspondence with display of the display unit, and second profile information indicating a ratio of each value of the three primary colors in white display in which luminance is increased as compared with the first profile information; and
a display control unit configured to control a tint of the display unit by switching and using the first profile information and the second profile information when performing display on the display unit.

2. The information processing apparatus according to claim 1,
wherein the display control unit is configured to:
control the tint of the display unit based on the first profile information for performing tint correction with color priority in a normal state; and
switch to the second profile information and control the tint of the display unit when brightness of a screen is prioritized.

3. The information processing apparatus according to claim 2,
wherein when the brightness of the screen is prioritized and where brightness exceeding maximum luminance according to the first profile information is designated by an operation of a function key, and
the display control unit is configured to switch to the second profile information and control the tint of the display unit when the brightness exceeding the maximum luminance according to the first profile information is designated by the operation of the function key.

4. The information processing apparatus according to claim 3,
wherein the second profile information includes multi-stage profile information brighter than the first profile information, and
the display control unit is configured to switch the multi-stage profile information in response to the operation of the function key and control the tint of the display unit.

5. The information processing apparatus according to claim 2,
wherein when the brightness of the screen is prioritized and where a white pixel ratio of an image displayed on the display unit is equal to or less than a threshold value,
the display control unit is configured to switch to the second profile information and control the tint of the display unit when the white pixel ratio of the image is equal to or less than the threshold value.

6. The information processing apparatus according to claim 2,
wherein when the brightness of the screen is prioritized and ambient brightness is equal to or greater than a threshold value,
the display control unit is configured to switch to the second profile information and control the tint of the display unit when the ambient brightness is equal to or greater than the threshold value.

7. A control method of an information processing apparatus including a display unit configured to display colors based on three primary colors of red, blue, and green, a profile information storage unit configured to store first profile information indicating a ratio of each value of the three primary colors in white display adjusted in correspondence with display of the display unit, and second profile information indicating a ratio of each value of the three primary colors in white display in which luminance is increased as compared with the first profile information, and a display control unit configured to control a tint of the display unit, the control method comprising:
a display control step of controlling the tint of the display unit by switching and using the first profile information and the second profile information when the display control unit performs display on the display unit.

8. The control method according to claim 7, comprising:
controlling the tint of the display unit based on the first profile information for performing tint correction with color priority in a normal state; and
switching to the second profile information and controlling the tint of the display unit when brightness of a screen is prioritized.

9. The control method according to claim 8,
wherein when the brightness of the screen is prioritized and brightness exceeding maximum luminance according to the first profile information is designated by an operation of a function key, the method comprises
switching to the second profile information and controlling the tint of the display unit when the brightness exceeding the maximum luminance according to the first profile information is designated by the operation of the function key.

10. The control method according to claim 9,
wherein the second profile information includes multi-stage profile information brighter than the first profile information, and the method comprises
switching the multi-stage profile information in response to the operation of the function key and controlling the tint of the display unit.

11. The control method according to claim 8,
wherein when the brightness of the screen is prioritized and a white pixel ratio of an image displayed on the display unit is equal to or less than a threshold value, the method comprises
switching to the second profile information and controlling the tint of the display unit when the white pixel ratio of the image is equal to or less than the threshold value.

12. The control method according to claim 8,
wherein when the brightness of the screen is prioritized and ambient brightness is equal to or greater than a threshold value, the method comprises
switching to the second profile information and controlling the tint of the display unit when the ambient brightness is equal to or greater than the threshold value.
